# EUROPÄISCHE PATENTSCHRIFT

(11) **EP 3 684 523 B1**
(45) Veröffentlichungstag und Bekanntmachung des Hinweises auf die Patenterteilung: **12.05.2021**
(21) Anmeldenummer: 18779298.1
(22) Anmeldetag: 19.09.2018
(51) Int. Cl.: B21B 31/07

(54) **WALZGERÜST**
ROLL STAND
CAGE DE LAMINAGE

(30) Priorität: 19.09.2017 DE 102017216547
(43) Veröffentlichungstag der Anmeldung: 29.07.2020
(73) Patentinhaber: SMS Group GmbH, 40237 Düsseldorf (DE)
(72) Erfinder: ALKEN, Johannes, 57076 Siegen (DE); KNIE, Daniel, 57258 Freudenberg (DE); BRAACH, Dennis, 57250 Netphen (DE)
(74) Vertreter: Klüppel, Walter
(86) Internationale Anmeldenummer: PCT/EP2018/075385
(87) Internationale Veröffentlichungsnummer: WO 2019/057790

(56) Entgegenhaltungen:
- EP-B1- 2 858 767
- WO-A1-2007/121806
- WO-A1-2010/069590

## Beschreibung

Die Erfindung betrifft ein Walzgerüst mit mindestens einer Walze zum Walzen von Walzgut. Die Walze hat einen Walzenballen und typischerweise zwei Walzenzapfen. Auf den Walzenzapfen sind Zapfenbuchsen aufgeschoben, mit welchen die Walze in Einbaustücken in einem Walzgerüst drehbar gelagert ist.

Bei den Walzen, wie sie im Rahmen der vorliegenden Anmeldung angesprochen werden, handelt es sich typischerweise um Stützwalzen, wie sie in Warm- und Kaltwalzgerüsten der Walz- und Hüttenindustrie eingesetzt werden. Die Zapfenbuchsen bilden typischerweise zusammen mit Lagerbuchsen in den Einbaustücken ein radial wirkendes Gleitlager. Durch diese Gleitlager wird die Walzkraft aus einem stehenden System (Anstellzylinder) auf ein rotierendes System (Walze) übertragen.

Bei den Walzenzapfen in Verbindung mit den Walzenbuchsen werden zwei prinzipielle Bauformen unterschieden:
Zum einen gibt es konische Walzenzapfen mit konischen Zapfenbuchsen. Die Zapfenbuchse wird in diesen Fällen über einen Druckschulterring auf den Konus des Walzenzapfens gespannt. Auch rotatorisch wird dieser Verbund über eine Passfeder gesichert, und zur axialen Positionierung wird eine relativ große Befestigungseinheit benötigt, welche eine große Vorspannkraft aufbringen muss. Nachteilig an dieser Konstellation sind die große Befestigungseinheit, die Notwendigkeit für große und lange Walzenzapfen, das Erfordernis für viele zusätzliche Befestigungsbauteile und die Notwendigkeit für das Vorhandensein einer Aufziehvorrichtung zur Erzeugung der Vorspannkraft, mit welcher die konische Zapfenbuchse beim Aufziehen auf den konischen Walzenzapfen gedrückt werden muss.

Zylindrische Zapfenbuchsen werden dagegen typischerweise auf einen Walzenzapfen aufgeschrumpft. Deshalb sind sie axial nicht beweglich und eine radiale Verformung, die für eine hydrodynamische Tragkraftsteigerung zwingend erforderlich wäre, ist aufgrund der Aufschrumpfung ebenfalls nicht möglich. Außerdem sind Montage und Demontage der aufgeschrumpften Zapfenbuchsen aufwändig.

Ein Beispiel für eine nicht aufgeschrumpfte zylindrische Zapfenbuchse offenbart die europäische Patentschrift EP 2 858 767 B1. Gemäß dieser Patentschrift ist die Zapfenbuchse mit einem Übermaß, d. h. mit zumindest teilweise radialem Spiel auf den Walzenzapfen aufgesetzt.

Dieses radiale Spiel der Zapfenbuchse ist zwingend erforderlich, um mit dem Lager eine hydrodynamische Tragkraftsteigerung zu realisieren.

Bei derartigen hydrodynamischen Gleitlagern, insbesondere Ölfilmlagern, bewegt und verformt sich die Zapfenbuchse bei Belastung jedoch nicht nur in radialer Richtung, sondern auch in axialer Richtung. Insgesamt sollte die Zapfenbuchse bei diesen hydrodynamischen Gleitlagern idealerweise möglichst frei auf dem Walzenzapfen "aufschwimmen". Es versteht sich jedoch von selbst, dass diese Bewegungsfreiheit der Zapfenbuchse auf dem Walzenzapfen nicht beliebig und unbegrenzt sein kann.

Der Erfindung liegt deshalb die Aufgabe zugrunde, ein bekanntes Walzgerüst zum Walzen von Walzgut dahingehend weiterzubilden, dass ein Verschleiß oder eine Beschädigung von Bauteilen aufgrund axialer Belastungen durch die Zapfenbuchse wirksam unterbunden werden.

Diese Aufgabe wird durch den Gegenstand des Patentanspruchs 1 gelöst. Dieser ist dadurch gekennzeichnet, dass die Zapfenbuchse zwischen einem ersten Anschlag, gebildet durch das Axiallager, und einem zweiten Anschlag über eine axiale Wegstrecke a auf dem zylinderförmigen Walzenzapfen axial verschiebbar gelagert ist.

Weil die Befestigungseinheiten zum Halten der Zapfenbuchse während des Walzbetriebs auf dem Walzenzapfen nunmehr entbehrlich sind, kann das Walzgerüst und insbesondere können die Einbaustücke in der Breite kürzer gebaut werden.

Die beanspruchte Ausgestaltung des Walzgerüstes gewährt der Zapfenbuchse einen Freiheitsgrad für ihre Verschiebung oder Verformung in axialer Richtung. Mit der Gewährung dieses axialen Freiheitsgrades wird dem natürlichen Verschiebungs- und Verformungsbedürfnis der Zapfenbuchse während des Betriebs des hydrodynamischen Gleitlagers Rechnung getragen. Gleichzeitig wird durch die Gewährung des axialen Freiheitsgrades bzw. eines axialen Spiels - im Unterschied zu einer festen axialen Einspannung der Zapfenbuchse - verhindert, dass an den Einspannungen bzw. an den axialen Anschlägen für die Zapfenbuchse ein Verschleiß oder ein Defekt aufgrund mechanischer Überbelastung auftritt. Der beanspruchte axiale Freiheitsgrad für die Zapfenbuchse steht auch einer radialen Verformung der Zapfenbuchse nicht entgegen. Durch die Verwendung des Axiallagers als einseitigen Anschlag für die Zapfenbuchse sind vorteilhafterweise viele traditionell erforderliche Befestigungsteile nun nicht mehr erforderlich. Das gilt beispielsweise für einen Druckschulterring mit diversem Zubehör, welcher traditionell erforderlich war, um die Zapfenbuchse während des Walzbetriebs auf dem Walzenzapfen zu halten. Auch sind nun traditionell erforderliche Aufziehvorrichtungen zum Aufziehen der Zapfenbuchsen unter Vorspannung auf die Walzenzapfen nicht mehr erforderlich, wegen des jetzt vorhandenen und gewünschten radialen Spiels.

Gemäß einem ersten Ausführungsbeispiel ist das Axiallager in Bezug auf die drehbar gelagerte Walze drehfest angeordnet. Dies ist erforderlich, damit das Axiallager gegebenenfalls durch die Zapfenbuchse ausgeübte axiale Kräfte wirksam aufnehmen kann. Dazu muss sich das Axiallager in axialer Richtung irgendwo abstützen, erfindungsgemäß vorzugsweise an dem Einbaustück, mit welchem es vorzugsweise fest verbunden ist.

Die erfindungsgemäß vorgesehene vorteilhafte Ausgestaltung des Axiallagers als Gleitlager, vorzugsweise als Ölfilmlager, bietet den Vorteil, dass die Schmiermittelversorgung dieses Axiallagers über die ohnehin vorhandene Schmiermittelversorgung für das Walzgerüst erfolgen kann. Das Axiallager besteht vorteilhafterweise aus einem ringförmigen Grundkörper und einem mit dem Grundkörper vorzugsweise lösbar verbundenen Lagerring. Der Grundkörper und der Lagerring können auch einstückig ausgebildet sein. Die Schmiermittelversorgung des axialen Gleitlagers erfolgt vorteilhafterweise über einen in dem Grundkörper des Axiallagers geführten Schmiermittelkanal und mindestens eine in dem Lagerring vorgesehene und mit dem Schmiermittelkanal in fluidleitender Verbindung stehende Durchgangsbohrung. Durch die Durchgangsbohrung wird das Schmiermittel, beispielsweise Öl, nach außerhalb des Axiallagers in einen ringförmigen Zwischenraum zwischen dem Lagerring und der Zapfenbuchse gepumpt.

Vorteilhafterweise ist zwischen dem Grundkörper und dem Lagerring ein ringförmiger Schmiermittelsammelraum ausgebildet, um an der Rückseite des Lagerrings - über den gesamten Umfang verteilt - einen gleichmäßigen Druck in dem Schmiermittel zu erzeugen, bevor dieses in den besagten Zwischenraum eintritt.

Gemäß einem weiteren Ausführungsbeispiel weist der Lagerring über seinen Umfang verteilt eine Mehrzahl von Ringsegmenten auf, welche - bezogen auf den Grundkörper - axial in Richtung Zapfenbuchse vorstehen. Jedes der Ringsegmente weist der Zapfenbuchse zugewandte Teilflächen auf, welche planparallel zu einer radialen Ebene und/oder positiv und/oder negativ geneigt in Bezug auf diese radiale Ebene ausgebildet sein können. Die planparallelen Teilflächen fungieren dabei als Rastflächen bzw. als ballenferner Anschlag für die Zapfenbuchse. Die geneigten Teilflächen bilden zusammen mit der ihnen jeweils zugewandten Stirnseite der Zapfenbuchse - je nach Drehrichtung der Walze - einen sich in Umfangsrichtung verjüngenden Schmiermittelraum. Die Verjüngung des Schmiermittelraums in Drehrichtung der Walze bewirkt vorteilhafterweise einen Druckaufbau in dem Schmiermittel, welches während des Walzbetriebs bzw. bei Rotation der Walze in dem sich verjüngenden Raumbereich verdichtet wird. Auf diese Weise entsteht ein druckbelasteter Schmiermittelfilm zwischen dem axialen Gleitlager und der Stirnfläche der Zapfenbuchse, wodurch ein Verschleiß oder eine Beschädigung des Lagerrings während des Walzbetriebs wirksam verhindert wird. Gemäß einem weiteren Ausführungsbeispiel sind die Teilflächen der Ringsegmente in Umfangsrichtung des Lagerrings derart benachbart zueinander angeordnet, dass jeweils eine Fläche mit gegenüber der radialen Ebene positiver Neigung einer Fläche mit negativer Neigung zugewandt ist. Je nach Drehrichtung der Walze bildet entweder die Teilfläche mit positiver Neigung oder die Teilfläche mit negativer Neigung den besagten, sich in Umfangsrichtung verjüngenden Schmiermittelraum zum Druckaufbau in dem Schmiermittel.

Weitere vorteilhafte Ausgestaltungen des erfindungsgemäßen Walzgerüstes sind Gegenstand der abhängigen Ansprüche.

Der Beschreibung sind vier Figuren beigefügt, wobei
- Figur 1: ein Walzgerüst;
- Figur 2: einen Längsschnitt durch ein Einbaustück mit darin gelagerter Walze bzw. darin gelagertem Walzenzapfen;
- Figur 3: einen erfindungsgemäß ausgestalteten Lagerring; und
- Figur 4: einen Schnitt durch ein Ringsegment des Lagerringes in Umfangsrichtung
zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

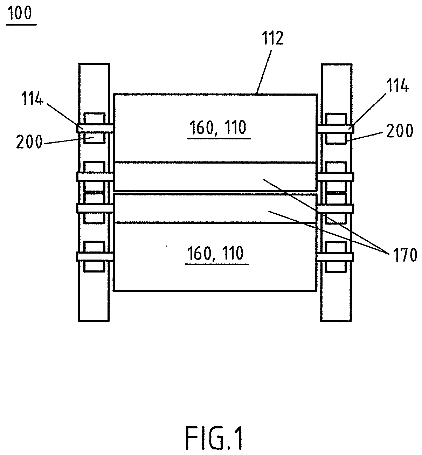

Figur 1 zeigt ein Walzgerüst 100, beispielhaft ein Quartowalzgerüst mit zwei Arbeitswalzen 170 zum Walzen von Walzgut, insbesondere von Metallprodukten, und zwei Stützwalzen 160 zum Stützen der Arbeitswalzen. Jede der Walzen hat jeweils einen Walzenballen 112 und zwei Walzenzapfen 114 über welche die jeweilige Walze in Einbaustücken 200 in dem Walzgerüst 100 drehbar gelagert ist.

Die vorliegende Erfindung betrifft insbesondere die Lagerung der Walzen bzw. Walzenzapfen in den Einbaustücken. Es müssen nicht alle Walzen bzw. Walzenzapfen in einem Walzgerüst gemäß der vorliegenden Erfindung gelagert sein. Die erfindungsgemäße Lagerung findet vorzugsweise Anwendung bei der Lagerung von Stützwalzen; die Erfindung ist allerdings nicht auf Stützwalzen beschränkt.

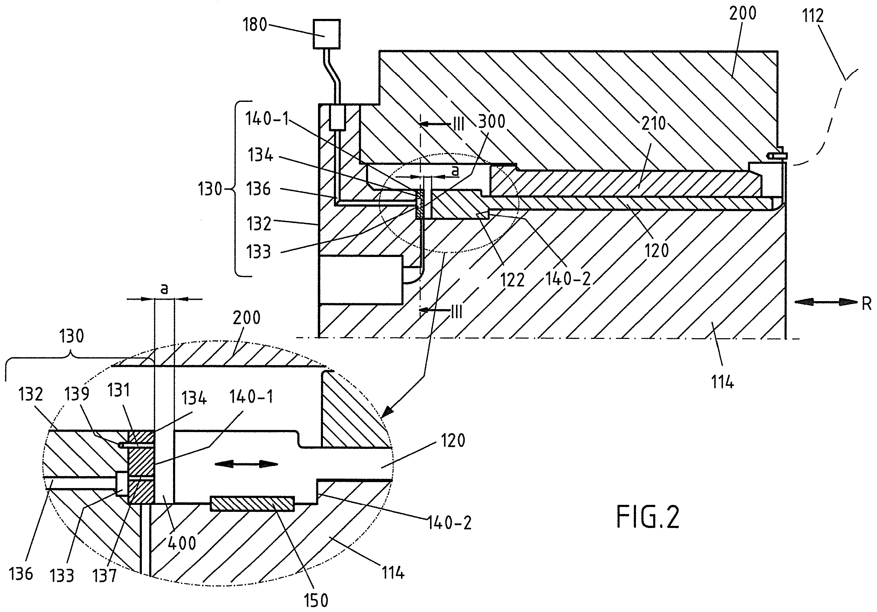

Figur 2 zeigt beispielhaft die erfindungsgemäße Lagerung. Zu erkennen ist ein Einbaustück 200, auch Lagergehäuse genannt, mit einer Lagerbuchse 210. Die Lagerbuchse spannt einen zylinderförmigen Aufnahmeraum auf zur Aufnahme eines Walzenzapfens 114 einer Walze 110. Für die vorliegende Erfindung ist der Walzenzapfen 114 zylinderförmig ausgebildet. Auf den Walzenzapfen ist eine zylinderförmige Zapfenbuchse 120 mit radialem Spiel aufgeschoben. In axialer Richtung R versetzt ist an der walzenballenfernen Seite der Zapfenbuchse ein Axiallager 130 vorgesehen. Dieses Axiallager fungiert erfindungsgemäß als ein erster bzw. ballenferner Anschlag 140-1 für die Zapfenbuchse 120. Neben dem ersten Anschlag 140-1 wird die axiale Bewegungsfreiheit der Zapfenbuchse 120 weiterhin durch einen zweiten bzw. ballennahen Anschlag 140-2 begrenzt. Zwischen diesen beiden Anschlägen ist die Zapfenbuchse über eine axiale Wegstrecke a axial frei verschiebbar gelagert. Die Wegstrecke a, d. h. das der Zapfenbuchse 120 in axialer Richtung R zugestandene Spiel, liegt beispielsweise zwischen 1 mm und 20 mm. Anders als die Lagerbuchse 210, welche fest mit dem Einbaustück 200 verbunden ist, ist die Zapfenbuchse 120 aufgrund ihres radialen und axialen Spiels in radialer und axialer Richtung frei beweglich. In Umfangsrichtung der Walze 110 ist sie allerdings typischerweise durch eine Passfeder 150 festgelegt.

Das Axiallager 130 ist erfindungsgemäß als Gleitlager, vorzugsweise als Ölfilmlager, ausgebildet. Es besteht aus einem vorzugsweise mit dem Einbaustück 200 fest, aber vorzugsweise lösbar verbundenen ringförmigen Grundkörper 132 und einem mit dem Grundkörper fest, vorzugsweise jedoch lösbar, verbundenen Lagerring 134. Der Lagerring ist an der der Zapfenbuchse 120 zugewandten Seite des Grundkörpers 132 koaxial zu dem Grundkörper angeordnet und mit dem Grundkörper beispielsweise mit Schrauben 131 verschraubt. Die lösbare Verbindung zwischen Lagerring 134 und Grundkörper 132 ist vorteilhaft, um den Lagerring im Falle eines Verschleißes einfach austauschen zu können und um einen nachfolgend beschriebenen Schmiermittelsammelraum 133 fertigungstechnisch einfach ausbilden zu können. Alternativ bzw. grundsätzlich können der Lagerring 134 und der Grundkörper 132 jedoch auch einstückig ausgebildet sein.

In Figur 2 ist weiterhin zu erkennen, dass in dem Grundkörper 132 mindestens ein Schmiermittelkanal 136 ausgebildet ist, welcher an die ohnehin vorhandene Schmiermittelversorgung 180 des Walzgerüstes angeschlossen ist. Der Schmiermittelkanal 136 ermöglicht das Zuführen von Schmiermittel, z. B. Öl, von der Schmiermittelversorgung 180 durch Durchgangsbohrungen 137 in dem Lagerring 134 hindurch in einen ringförmigen Zwischenraum 400 zwischen dem Lagerring 134 und der Zapfenbuchse 120. Vorzugsweise ist zwischen dem Grundkörper 132 und dem Lagerring 134 ein ringförmiger Schmiermittelsammelraum 133 ausgebildet, welcher vorteilhafterweise eine Vergleichmäßigung des Druckaufbaus in dem Schmiermittel in Umfangsrichtung ermöglicht.

Der zweite bzw. walzenballennahe Anschlag 140-2 zur Begrenzung der axialen Bewegungsfreiheit der Zapfenbuchse 120 wird, wie in Figur 2 dargestellt, beispielsweise durch einen Absatz in der Oberfläche des Walzenzapfens 114 gebildet. An der Innenseite der Zapfenbuchse 120 ist dann ein komplementärer Anschlag 122 ausgebildet zum Anschlagen gegen den Absatz 140-2 in der Oberfläche des Walzenzapfens 114.

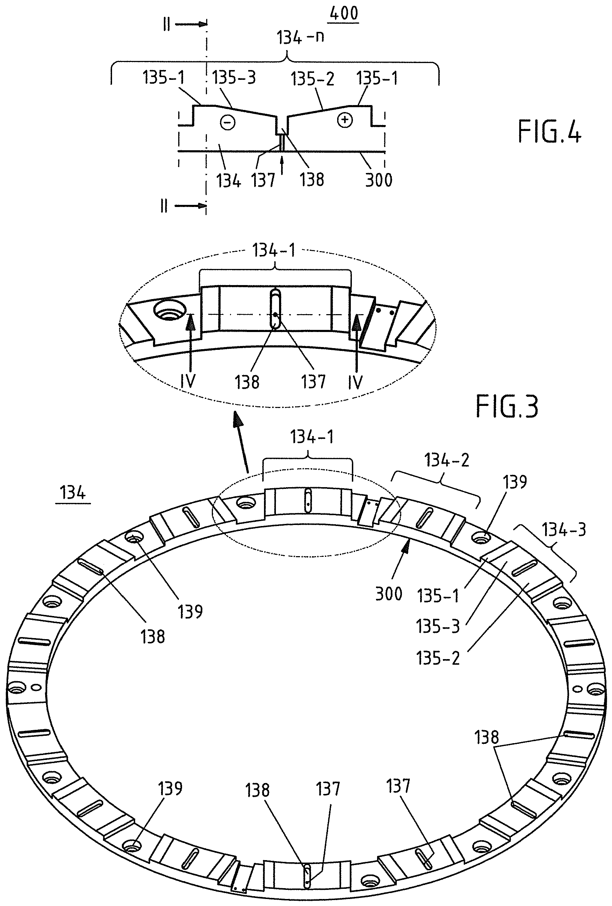

Figur 3 zeigt den erfindungsgemäßen Lagerring 134 in vergrößerter perspektivischer Detaildarstellung. Es ist zu erkennen, dass der Lagerring 134 über seinen Umfang verteilt eine Mehrzahl von Ringsegmenten 134-1, 134-2 usw. aufweist. Diese Ringsegmente erheben sich gegenüber der ebenen Rückseite 300 des Lagerrings 134. Anders ausgedrückt: In eingebautem Zustand ist die Rückseite 300 des Lagerrings dem Grundkörper 132 zugewandt und die Ringsegmente sind jeweils auf der dem Grundkörper 132 abgewandten Seite des Lagerrings 134 ausgebildet und erheben sich insofern von dem Grundkörper weg in Richtung Zapfenbuchse. Die dem Grundkörper 132 zugewandte Rückseite 300 des Lagerrings 134 bildet dann eine radiale Ebene 300. Bezogen auf diese Rückseite bzw. radiale Ebene bilden die Ringsegmente 134-n jeweils Erhebungen.

In Umfangsrichtung wechseln sich die besagten radialen Segmente 134-n mit n = 1 bis N und Löcher 139 vorzugsweise ab. Die Löcher 139 dienen zur Verschraubung des Lagerrings 134 mit dem Grundkörper 132.

Die besagten Ringsegmente weisen jeweils Teilflächen 135-1, 135-2 und 135-3 auf, welche gegenüber der besagten radialen Ebene 300 unterschiedlich geneigt sind.

Figur 4 zeigt einen Längsschnitt durch ein solches Ringsegment 134-n in einer Detailansicht. Die im unteren Bereich von Figur 4 gezeigte horizontale Linie repräsentiert die dem Grundkörper 132 zugewandte Fläche bzw. die Rückseite des Lagerrings 134. Diese Linie repräsentiert auch die radiale Bezugsebene 300. Auf seiner dem Grundkörper 132 abgewandten Stirnseite zeigt das Ringsegment 134 eine Struktur, welche im Wesentlichen durch drei verschiedene Teilflächen 135-1, 135-2 und 135-3 gebildet ist. Die Teilflächen 135-1 verlaufen im Wesentlichen parallel zu der radialen Ebene 300. Sie können als Rast- bzw. Ablagefläche für die Zylinderbuchse außerhalb des Walzbetriebs dienen. Die beiden Teilflächen 135-2 und 135-3 unterscheiden sich ihrer Neigung gegenüber der radialen Bezugsebene 300. Während die Teilfläche 135-2 eine positive Neigung gegenüber der radialen Bezugsebene 300 aufweist, ist die Neigung bzw. Steigung der Teilfläche 135-3 negativ gegenüber der radialen Bezugsebene 300. Bei beiden Teilflächen kann die Steigung beispielsweise 1:100 betragen. Vorzugsweise sind die beiden Teilflächen 135-2 und 135-3 mit ihren unterschiedlichen Neigungen benachbart und einander zugewandt ausgebildet, wie in Figur 4 gezeigt.

Zwischen den beiden Teilflächen mit unterschiedlicher Neigung ist vorzugsweise eine Schmiermitteltasche 138 ausgebildet, welche an ihrem Boden die Durchgangsbohrung 137 aufweist, welche fluidleitend mit dem Schmiermittelkanal 136 in dem Grundkörper 132 des Axiallagers 130 verbunden ist. Während des Walzbetriebs tritt Schmiermittel in Pfeilrichtung durch die Durchgangsbohrung 137 hindurch, zunächst in die Schmiermitteltasche 138, und von dort in den ringförmigen Zwischenraum 400 zwischen dem Lagerring und der Zapfenbuchse 120.

Bezüglich der Funktion der geneigten Teilflächen 135-2 und 135-3 zum Druckaufbau sei an dieser Stelle auf die oben gegebene Beschreibung verwiesen.

### Bezugszeichenliste

- 100: Walzgerüst
- 110: Walze
- 112: Walzenballen
- 114: Walzenzapfen
- 120: Zapfenbuchse
- 122: Anschlag
- 130: Axiallager
- 131: Schraube
- 132: Grundkörper
- 133: Schmiermittelsammelraum
- 134: Lagerring
- 134-1, -2, -3, - n: Ringsegmente
- 135-1, -2, -3: Teilflächen eines Ringsegments
- 136: Schmiermittelkanal
- 137: Durchgangsbohrung
- 138: Schmiermitteltasche
- 139: Löcher
- 140-1: erster Anschlag
- 140-2: zweiter Anschlag
- 150: Passfeder
- 160: Stützwalze
- 170: Arbeitswalze
- 180: Schmiermittelversorgung
- 200: Einbaustück
- 210: Lagerbuchse
- 300: radiale Ebene bzw. Rückseite des Lagerrings
- 400: ringförmiger Zwischenraum
- a: Wegstrecke
- R: axiale Richtung

## Patentansprüche

1. Walzgerüst zum Walzen von Walzgut, insbesondere von Metallprodukten, aufweisend:
mindestens zwei Einbaustücke (200);
mindestens eine Walze (110) mit einem Walzenballen (112) und zwei Walzenzapfen (114), von denen mindestens einer zylinderförmig ausgebildet ist,
wobei die Walze mit ihren Walzenzapfen in den Einbaustücken (200) drehbar gelagert ist;
eine mit radialem Spiel auf dem zylinderförmigen Walzenzapfen (114) koaxial angeordnete zylinderförmige Zapfenbuchse (120), wobei die Einbaustücke (200) jeweils Lagerbuchsen (210) aufweisen zum Aufnehmen der Walzenzapfen (114) der Walze (110) mit ihren jeweiligen Zapfenbuchsen (120); und
ein axial versetzt zu der Zapfenbuchse angeordnetes ringförmiges Axiallager (130);
**dadurch gekennzeichnet,**
**dass** die Zapfenbuchse (120) zwischen einem ersten Anschlag (140-1) gebildet durch das Axiallager (130), und einem zweiten Anschlag (140-2) über eine axiale Wegstrecke a auf dem zylinderförmigen Walzenzapfen (114) axial verschiebbar gelagert ist.

2. Walzgerüst (100) nach Anspruch 1,
**dadurch gekennzeichnet,**
**dass** das Axiallager (130) drehfest in Bezug auf die drehbar gelagerte Walze (110) angeordnet, insbesondere fest mit dem Einbaustück (200) verbunden ist.

3. Walzgerüst (100) nach Anspruch 2,
**dadurch gekennzeichnet,**
**dass** das Axiallager (130) als Gleitlager, insbesondere als Ölfilmlager ausgebildet ist und vorzugsweise einen mit dem Einbaustück - vorzugsweise lösbar - fest verbundenen ringförmigen Grundkörper (132) und einen Lagerring (134) aufweist, welcher an der der Zapfenbuchse (120) zugewandten Seite des Grundkörpers (132) koaxial zu dem Grundkörper angeordnet und mit dem Grundkörper - vorzugsweise lösbar - fest verbunden ist.

4. Walzgerüst (100) nach Anspruch 3,
**dadurch gekennzeichnet,**
**dass** der Grundkörper (132) und der Lagerring (134) einstückig ausgebildet sind.

5. Walzgerüst (100) nach Anspruch 3 oder 4,
**dadurch gekennzeichnet,**
**dass** der Grundkörper (132) mindestens einen Schmiermittelkanal (136) und der Lagerring (134) mindestens eine - mit dem Schmiermittelkanal (136) in fluidleitender Verbindung stehende - Durchgangsbohrung (137) aufweist zum Zuführen von Schmiermittel nach außerhalb des Axiallagers (130) in einen ringförmigen Zwischenraum (400) zwischen dem Lagerring (134) und der Zapfenbuchse (120).

6. Walzgerüst (100) nach Anspruch 5,
**dadurch gekennzeichnet,**
**dass** zwischen dem Grundkörper (132) und dem Lagerring (134) ein ringförmiger Schmiermittelsammelraum (133) ausgebildet ist.

7. Walzgerüst (100) nach einem der Ansprüche 3 bis 6,
**dadurch gekennzeichnet,**
**dass** der Lagerring (134) über seinen Umfang verteilt eine Mehrzahl von Ringsegmenten (134-1, 134-2, 134-3) aufweist, welche - bezogen auf die Rückseite des Lagerrings bzw. auf eine radiale Ebene (300) zwischen dem Grundkörper (132) und dem Lagerring (134) - in Richtung Zapfenbuchse (120) vorstehen; und
**dass** die der Zapfenbuchse zugewandten Teilflächen (135-1, 135-2, 135-3) jedes der Ringsegmente planparallel zu der radialen Ebene (300) und/oder positiv und/oder negativ geneigt ausgebildet sind in Bezug auf die radiale Ebene (300).

8. Walzgerüst (100) nach Anspruch 7,
**dadurch gekennzeichnet,**
**dass** Teilflächen (135-2; 135-3) der Ringsegmente (134-1, 134-2) in Umfangsrichtung des Lagerrings (134) derart benachbart zueinander angeordnet sind, dass jeweils eine Fläche (135-2) mit gegenüber der radialen Ebene (300) positiver Neigung einer Fläche (135-3) mit negativer Neigung zugewandt ist.

9. Walzgerüst (100) nach mindestens einem der Ansprüche 5 bis 7,
**dadurch gekennzeichnet,**
**dass** die Durchgangsbohrung (137) in dem Lagerring (134) zwischen einer Teilfläche (135-2) mit positiver Neigung und einer Teilfläche (135-3) mit negativ geneigter Fläche angeordnet ist.

10. Walzgerüst (100) nach einem der vorangegangenen Ansprüche,
**dadurch gekennzeichnet,**
**dass** für die axiale Wegstrecke a, welche der Breite des Zwischenraumes entspricht, gilt: 1mm ≤ a ≤ 20 mm.

11. Walzgerüst (100) nach einem der vorangegangenen Ansprüche,
**gekennzeichnet durch**
eine zwischen dem Walzenzapfen (114) und der Zapfenbuchse (120) angeordnete Passfeder (150) zum Unterbinden einer Drehbewegung der Zapfenbuchse (120) relativ zu dem Walzenzapfen (114).

12. Walzgerüst (100) nach einem der vorangegangenen Ansprüche,
**dadurch gekennzeichnet,**
**dass** der zweite Anschlag (140-2) durch einen Absatz in der Oberfläche des Walzenzapfens (114) gebildet ist.

13. Walzgerüst (100) nach Anspruch 12,
**dadurch gekennzeichnet,**
**dass** an der Innenseite der Zapfenbuchse (120) ein Anschlag (122) ausgebildet ist zum Anschlagen gegen den Absatz (140-2) in der Oberfläche des Walzenzapfens (114).

14. Walzgerüst (100) nach einem der vorangegangenen Ansprüche,
**dadurch gekennzeichnet,**
**dass** die Zapfenbuchse (120) in axialer Richtung (R) näher an dem Walzenballen (112) angeordnet ist als das Axiallager (130).

15. Walzgerüst (100) nach einem der vorangegangenen Ansprüche,
**dadurch gekennzeichnet,**
**dass** es sich bei der mindestens einen Walze (110) um eine Stützwalze handelt.

16. Walzgerüst (100) nach einem der vorangegangenen Ansprüche,
**dadurch gekennzeichnet,**
**dass** das Walzgerüst (100) zwei Stützwalzen (160) und zwei zwischen den Stützwalzen drehbar gelagerte Arbeitswalzen (170) aufweist zum Walzen des Walzgutes.

17. Walzgerüst (100) nach Anspruch 16,
**dadurch gekennzeichnet,**
**dass** zwischen den Stütz- und den Arbeitswalzen jeweils Zwischenwalzen drehbar gelagert sind.

18. Walzgerüst (100) nach einem der Ansprüche 5 bis 17, **dadurch gekennzeichnet,**
**dass** der Schmiermittelkanal (136) des Grundkörpers an die Schmiermittelversorgung (180) des Walzgerüstes angeschlossen ist.

## Claims

1. Roll stand for the rolling of rolling material, particularly metal products, comprising:
at least two chocks (200);
at least one roll (110) with a roll barrel (112) and two roll journals (114), of which at least one is formed to be cylindrical, wherein the roll is rotatably mounted by the roll journals thereof in the chocks (200);
a cylindrical journal bush (120) coaxially arranged with a radial play on the cylindrical roll journal (114), wherein the chocks (200) each comprise bearing bushes (210) for reception of the roll journals (114) of the roll (110) by the respective journal bushes (120) thereof; and
an annular axial bearing (130) arranged to be axially offset with respect to the journal bush;
**characterised in that**
the journal bush (120) is mounted on the cylindrical roll journal (114) to be axially displaceable over an axial travel path a between a first abutment (140-1) formed by the axial bearing (130) and a second abutment (140-2).

2. Roll stand (100) according to claim 1,
**characterised in that**
the axial bearing (130) is arranged to be secure against rotation with respect to the rotatably mounted roll (110), in particular is fixedly connected with the chock (200).

3. Roll stand (100) according to claim 2,
**characterised in that**
the axial bearing (130) is configured as a slide bearing, particularly as an oil film bearing, and preferably comprises an annular base body (132), which is fixedly - preferably detachably - connected with the chock, and a bearing ring (134), which is arranged coaxially with the base body (132) at the side of the base body facing the journal bush (120) and which is fixedly - preferably detachably - connected with the base body.

4. Roll stand (100) according to claim 3,
**characterised in that**
the base body (132) and the bearing ring (134) are of integral construction.

5. Roll stand (100) according to claim 3 or 4,
**characterised in that**
the base body (132) has at least one lubricant channel (136) and the bearing ring (134) has at least one passage bore (137), which is in fluid-conductive connection with the lubricant channel (136), for the feed of lubricant outwardly of the axial bearing (130) to an annular intermediate space (400) between the bearing ring (134) and the journal bush (120).

6. Roll stand (100) according to claim 5,
**characterised in that**
an annular lubricant collecting space (133) is formed between the base body (132) and the bearing ring (134).

7. Roll stand (100) according to any one of claims 3 to 6,
**characterised in that**
the bearing ring (134) has in distribution over its circumference a plurality of annular segments (134-1, 134-2, 134-3) which with respect to the rear side of the bearing ring or a radial plane (300) between the base body (132) and the bearing ring (134) project in the direction of the journal bush (120); and
the part surfaces (135-1, 135-2, 135-3), which face the journal bush, of each of the annular segments are formed to be planoparallel with respect to the radial plane (300) and/or positively and/or negatively inclined with respect to the radial plane (300).

8. Roll stand (100) according to claim 7,
**characterised in that**
the part surfaces (135-2; 135-3) of the annular segments (134-1, 134-2) are so arranged adjacent to one another in the circumferential direction of the bearing ring (134) that in each instance a surface (135-2) with a positive inclination relative to the radial plane (300) faces a surface (135-3) with a negative inclination.

9. Roll stand (100) according to at least one of claims 5 to 7,
**characterised in that**
the passage bore (137) in the bearing ring (134) is arranged between a part surface (135-2) with a positive inclination and a part surface (135-3) with a negatively inclined surface.

10. Roll stand (100) according to any one of the preceding claims,
**characterised in that**
applicable to the axial travel path a which corresponds with the width of the intermediate space is 1 millimetre ≤ a ≤ 20 millimetres.

11. Roll stand (100) according to any one of the preceding claims,
**characterised by**
a key (150), which is arranged between the roll journal (114) and the journal bush (120), for preventing rotational movement of the journal bush (120) relative to the roll journal (114).

12. Roll stand (100) according to any one of the preceding claims,
**characterised in that**
the second abutment (140-2) is formed by a shoulder in the surface of the roll journal (114).

13. Roll stand (100) according to claim 12,
**characterised in that**
an abutment (122) for abutting against the shoulder (140-2) in the surface of the roll journal (114) is formed at the inner side of the journal bush (120).

14. Roll stand (100) according to any one of the preceding claims,
**characterised in that**
the journal bush (120) is arranged closer to the roll barrel (112) in axial direction (R) than the axial bearing (130).

15. Roll stand (100) according to any one of the preceding claims,
**characterised in that**
the at least one roll (110) is a backing roll.

16. Roll stand (100) according to any one of the preceding claims,
**characterised in that**
the roll stand (100) comprises two backing rolls (160) and two work rolls (170), which are rotatably mounted between the backing rolls, for the rolling of the rolling material.

17. Roll stand (100) according to claim 16,
**characterised in that**
respective intermediate rolls are rotatably mounted between the backing rolls and work rolls.

18. Roll stand (100) according to any one of claims 5 to 17,
**characterised in that**
the lubricant channel (136) of the base body is connected with the lubricant supply (180) of the roll stand.

## Revendications

1. Cage de laminoir destinée au laminage d'un produit de laminage, en particulier de produits métalliques, qui présente :
au moins deux empoises (200) ;
au moins un cylindre (110) qui comprend une table de cylindre (112) et deux tourillons de cylindre (114), dont au moins un réalisé sous une forme cylindrique ; dans laquelle le cylindre est monté en rotation avec ses tourillons de cylindre dans les empoises (200) ;
un coussinet de tourillon (120) de forme cylindrique qui est disposé en position coaxiale avec un jeu radial sur le tourillon de cylindre (114) possédant une forme cylindrique ; dans lequel les empoises (200) présentent respectivement des coussinets de paliers (210) qui sont destinés à la réception des tourillons de cylindre (114) du cylindre (110) avec leurs coussinets de tourillons respectifs (120) ; et un palier axial (130) de forme annulaire qui est disposé en décalage axial par rapport au coussinet de tourillon ;
**caractérisé**
**en ce que** le coussinet de tourillon (120) est monté de manière à pouvoir se déplacer dans la direction axiale entre une première butée (140-1) formée par le palier axial (130) et une deuxième butée (140-2), en parcourant un tronçon de déplacement axial a sur le tourillon de cylindre (114) de forme cylindrique.

2. Cage de laminoir (100) selon la revendication 1, **caractérisée en ce que** le palier axial (130) est disposé en antirotation par rapport au cylindre (110) qui est monté en rotation, en particulier est relié à demeure avec l'empoise (200).

3. Cage de laminoir (100) selon la revendication 2, **caractérisée en ce que** le palier axial (130) est réalisé sous la forme d'un palier de glissement, en particulier sous la forme d'un palier du type à film d'huile et présente de préférence un corps de base (132) de forme annulaire qui est relié à demeure à l'empoise - de préférence de manière à pouvoir être démonté - et une bague de palier (134) qui est disposée, en position coaxiale par rapport au corps de base, sur le côté du corps de base (132) qui est orienté dans la direction du coussinet de tourillon (120), et qui est reliée à demeure au corps de base - de préférence de manière à pouvoir être démontée.

4. Cage de laminoir (100) selon la revendication 3, **caractérisée en ce que** le corps de base (132) et la bague de palier (134) sont réalisés en une seule pièce.

5. Cage de laminoir (100) selon la revendication 3 ou 4, **caractérisée en ce que** le corps de base (132) présente au moins un canal (136) destiné à un agent de lubrification et la bague de palier (134) présente au moins un alésage de passage (137) - mis en liaison par conduction de fluide avec le canal (136) destiné à un agent de lubrification, l'alésage étant destiné à l'alimentation d'un agent de lubrification vers l'extérieur du palier axial (130) dans un espace intermédiaire (400) de forme annulaire qui est disposé entre la bague de palier (134) et le coussinet de tourillon (120).

6. Cage de laminoir (100) selon la revendication 5, **caractérisée en ce que**, entre le corps de base (132) et la bague de palier (134), est disposée une chambre (133) de forme annulaire qui est destinée à récolter l'agent de lubrification.

7. Cage de laminoir (100) selon l'une quelconque des revendications 3 à 6, **caractérisée en ce que** la bague de palier (134) présente à l'état réparti sur sa périphérie, une multitude de segments annulaires (134-1, 134-2, 134-3) qui font saillie - par rapport au côté dorsal de la bague de palier, respectivement sur un plan radial (300) entre le corps de base (132) et la bague de palier (134) - dans la direction du coussinet de tourillon (120) ; et
**en ce que** les surfaces partielles (135-1, 135-2, 135-3) qui sont orientées dans la direction du coussinet de tourillon de chacun des segments annulaires sont réalisées avec leurs faces planes parallèlement au plan radial (300) et/ou en étant inclinées dans un sens positif et/ou dans un sens négatif, par rapport au plan radial (300).

8. Cage de laminoir (100) selon la revendication 7, **caractérisée en ce que** des surfaces partielles (135-2 ; 135-3) des segments annulaires (134-1, 134-2) sont disposées, dans la direction périphérique de la bague de palier (134), en étant réciproquement voisines d'une manière telle que, respectivement une surface (135-2) est orientée, par rapport au plan radial (300), en présentant une inclinaison positive d'une surface (135-3) qui présente une inclinaison négative.

9. Cage de laminoir (100) selon au moins une des revendications 5 à 7, **caractérisée en ce que** l'alésage de passage (137) est disposé dans la bague de palier (134) entre une surface partielle (135-2) qui présente une inclinaison positive et une surface partielle (135-3) qui présente une surface affectée d'une inclinaison négative.

10. Cage de laminoir (100) selon l'une quelconque des revendications précédentes, **caractérisée en ce que** la dimension du trajet de déplacement axial a, qui correspond à la largeur de l'espace intermédiaire, est égale à : 1 mm ≤ a ≤ 20 mm.

11. Cage de laminoir (100) selon l'une quelconque des revendications précédentes, **caractérisée par** une clavette parallèle fixée par vis (150) qui est disposée entre le tourillon de cylindre (114) et le coussinet de tourillon (120) dans le but d'empêcher un mouvement de rotation du coussinet de tourillon (120) par rapport au tourillon de cylindre (114).

12. Cage de laminoir (100) selon l'une quelconque des revendications précédentes, **caractérisée en ce que** l'on obtient la deuxième butée (140-2) par l'intermédiaire d'un épaulement dans la surface du tourillon de cylindre (114).

13. Cage de laminoir (100) selon la revendication 12, **caractérisée en ce que**, contre le côté interne du coussinet de tourillon (120), est réalisée une butée (122) qui est destinée à venir se disposer contre l'épaulement (140-2) dans la surface du tourillon de cylindre (114).

14. Cage de laminoir (100) selon l'une quelconque des revendications précédentes, **caractérisée en ce que** le coussinet de tourillon (120) est disposé, dans la direction axiale (R), plus près de la table de cylindre (112) que le palier axial (130).

15. Cage de laminoir (100) selon l'une quelconque des revendications précédentes, **caractérisée en ce que**, en ce qui concerne ledit au moins un cylindre (110), il s'agit d'un cylindre de support.

16. Cage de laminoir (100) selon l'une quelconque des revendications précédentes, **caractérisée en ce que** la cage de laminoir (100) présente deux cylindres de support (160) et deux cylindres de travail (170) qui sont montés en rotation entre les cylindres de support, à des fins de laminage du produit de laminage.

17. Cage de laminoir (100) selon la revendication 16, **caractérisée en ce que**, entre les cylindres de support et les cylindres de travail, sont montés en rotation, respectivement, des cylindres intermédiaires.

18. Cage de laminoir (100) selon une des revendications 5 à 17, **caractérisée en ce que** le canal (136) du corps de base, destiné à l'agent de lubrification est raccordé à l'alimentation de la cage de laminoir en agent de lubrification (180).
